(19) Europäisches Patentamt
European Patent Office
Office européen des brevets

(11) **EP 1 825 234 B1**

(12) **EUROPÄISCHE PATENTSCHRIFT**

(45) Veröffentlichungstag und Bekanntmachung des Hinweises auf die Patenterteilung:
**02.09.2009 Patentblatt 2009/36**

(21) Anmeldenummer: **05813612.8**

(22) Anmeldetag: **04.11.2005**

(51) Int Cl.:
*G01J 3/443* (2006.01)   *G01J 3/28* (2006.01)
*G01N 21/71* (2006.01)   *G01J 3/30* (2006.01)
*G01J 3/04* (2006.01)

(86) Internationale Anmeldenummer:
**PCT/EP2005/011844**

(87) Internationale Veröffentlichungsnummer:
**WO 2006/063637 (22.06.2006 Gazette 2006/25)**

(54) **VERFAHREN ZUR VOLLAUTOMATISCHEN ÜBERTRAGUNG VON KALIBRATIONEN ZWISCHEN SPEKTROMETERN**

METHOD FOR THE FULLY AUTOMATIC TRANSMISSION OF CALIBRATING ADJUSTMENTS BETWEEN SPECTROMETERS

PROCEDE POUR LA TRANSMISSION ENTIEREMENT AUTOMATIQUE D'ETALONNAGES ENTRE DES SPECTROMETRES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **16.12.2004 DE 102004061178**

(43) Veröffentlichungstag der Anmeldung:
**29.08.2007 Patentblatt 2007/35**

(73) Patentinhaber: **Spectro Analytical Instruments 47533 Kleve (DE)**

(72) Erfinder: **JOOSTEN, Heinz-Gerd 47559 Kranenburg (DE)**

(74) Vertreter: **LENZING GERBER Patentanwälte Postfach 20 05 09 40103 Düsseldorf (DE)**

(56) Entgegenhaltungen:
DE-A1- 10 152 679     FR-A- 2 504 264
US-A- 3 495 909

**Beschreibung**

Die vorliegende Erfindung betrifft ein Verfahren mit den Merkmalen des Oberbegriffs des Anspruchs 1.

Die Dokumente FR-A-2 504 264, US-A-3 495 909 und DE 101 52 679 zeigen Spektrometer, deren Optik mit positionierbaren Spalten versehen Ist. Ein Verfahren zur Ermittlung einer Kalibrierungsfunktion für solche Spektrometer ist dort nicht beschrieben.

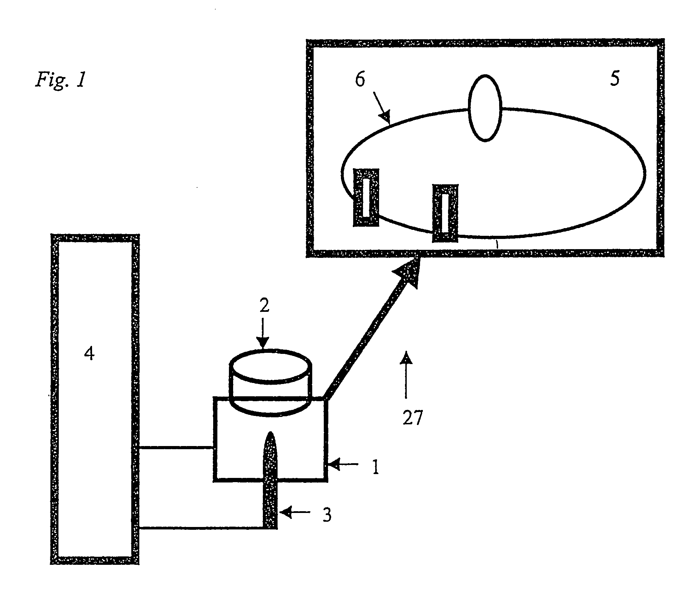

Emissionsspektrometer mit Funken- und/oder Bogenanregung werden in der Multielement-Routineanalytik von Metallen eingesetzt. Fig. 1 zeigt den allgemeinen Stand der Technik anhand einer schematischen Darstellung des Aufbaus solcher Systeme. Das Stativ (1) erlaubt die Auflage einer Probe (2) im Abstand von 0.5 bis 5 mm zu einer Gegenelektrode (3). Der Anregungsgenerator (4) erzeugt zunächst einen Hochspannungsimpuls, der die Atmosphäre zwischen Probenoberfläche und Gegenelektrode (Luft oder Schutzgas) ionisiert und damit niederohmig macht. Beim Bogengenerator wird dann über die niederohmige Funkenstrecke ein Gleichstrom der Stärke 1 A bis 10 A eingespeist; dieser Lichtbogen wird für eine Dauer von 0,5 s bis 10 s aufrechterhalten.

Der Funkengenerator erzeugt statt eines einzigen langen Impulses kurze Impulse der Dauer $50\mu s$ bis 2ms mit einer Abfolgefrequenz zwischen 50 Hz und 800 Hz. Vor jedem einzelnen Funken ist ein neuer Zündimpuls erforderlich. Es bildet sich ein thermisches Plasma mit Temperaturen zwischen 4000K und 20000K aus, in dem freie Atome und Ionen zur Emission eines Linienspektrums angeregt werden. Das emittierte Licht gelangt entweder über den direkten Lichtweg oder einen Lichtleiter (27) in ein optisches System (5), auf dessen Fokalkurve (6) die Spektrallinien scharf abgebildet werden.

Zurzeit sind zwei Methoden gebräuchlich, die auf der Fokalkurve scharf abgebildeten Spektrallinien zu messen:

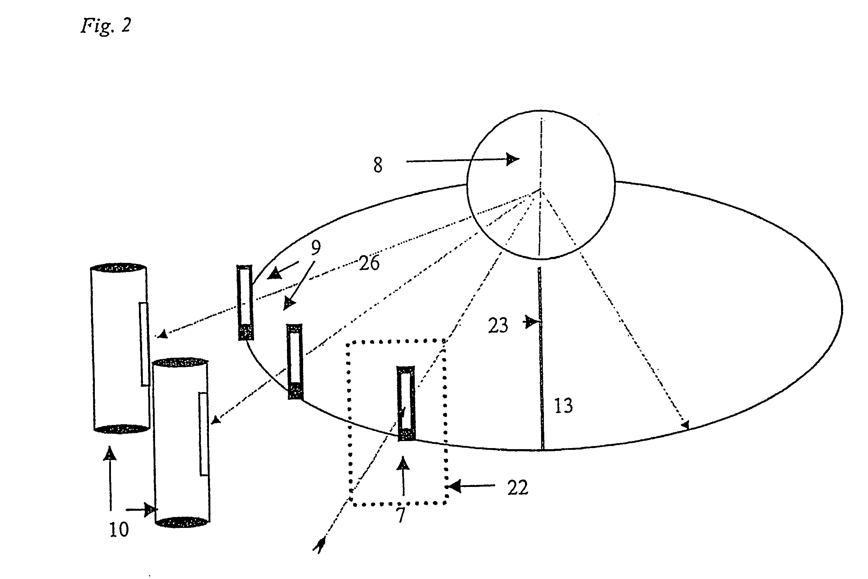

1. Der erste Typ von Spektrometersystemen ist in Fig. 2 gezeigt, die ebenfalls den Stand der Technik darstellt. Das Licht fällt durch einen Eintrittspalt (7) auf ein Konkavgitter (8). Es entsteht ein Spektrum als eine Menge wellenlängenabhängiger Beugungsbilder des Eintrittspalts. Die interessierenden Spektrallinien werden mit Austrittspalten (9) ausgeblendet und ihre Intensität wird mittels Photovervielfacherröhren (10) gemessen.

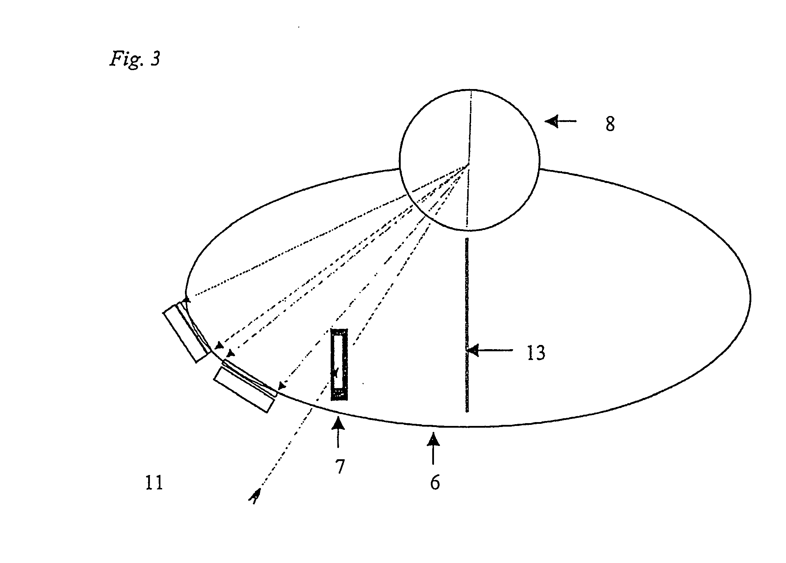

2. Die zweite gebräuchliche Spektrometerbauform nach dem Stand der Technik ist in Fig. 3 skizziert. Auch bei dieser Ausführungsform fällt das Licht durch einen Eintrittspalt (7) auf das Gitter (8). Hier sind aber statt einzelner Austrittspalte Multikanalsensoren (11) entlang der Fokalkurve (6) montiert. Diese Multikanalsensoren bestehen aus einem linear angeordneten Feld von photoempfindlichen Sensorelementen, den so genannten Pixeln. In dieser Bauform ist eine gleichzeitige Aufnahme von kompletten Spektralbereichen möglich.

Für die als geeignet bekannten Spektrallinien werden nun Kalibrationsfunktionen bestimmt, die die Messwerte auf Elementgehalte abbilden. Bei Geräten, die wie oben unter (1.) beschrieben mit Austrittspalten bestückt sind, werden die Kalibrationsfunktionen nach dem Stand der Technik für jedes Gerät als Bestandteil des Produktionsprozesses bestimmt.

Zu diesem Zweck wird für jede Materialgruppe ein Satz von Standardproben gemessen. Anschließend wird über eine multivariante Regressionsrechnung spezifisch für jede Materialgruppe und jedes Element ein Kalibrationspolynom ermittelt. Eine Materialgruppe umfasst Werkstoffe mit ähnlichen chemischen Zusammensetzungen. Beispiele für Materialgruppen sind Chromstähle, niedrig legierte Stähle oder Bleibronzen. Geräte mit Meßmethoden für über dreißig Elemente in mehr als zwanzig Materialgruppen sind nicht selten. Pro Materialgruppe müssen zur Ermittlung der Kalibrationsfunktionen bis zu einhundert Standardproben gemessen werden.

Messen der Standards, Bestimmung der Kalibrationsfunktionen und abschließende Kontrolle beansprucht bei Geräten mit umfangreichen Anwendungen mehr als einen Mannmonat Arbeitszeit. Dieser Arbeitsaufwand ist ein erheblicher Kostenfaktor. Deshalb ist man bestrebt, den Kalibrationsprozess zu vereinfachen.

Dabei wird folgender Lösungsansatz verfolgt:

Die Anzahl von Standards pro Materialgruppe wird auf typisch fünf bis zwanzig Standards verringert. Mit Hilfe dieses reduzierten Satzes von Standardproben werden der konstante und der lineare Term des Kalibrationspolynoms sowie die größten Linien- und Interelementstörungen neu bestimmt. Die übrigen Variablen werden aus einer 'Grundkalibration' übernommen. Bei dieser Vorgehensweise sind erheblich weniger Kalibrationsstandards zu messen. Die Kalibration ist aber weiterhin durch Messungen von Kontrollproben zu überprüfen. Es können nicht die Richtigkeiten der Grundkalibration erreicht werden. Das ist bedingt durch die Tatsache, dass Störer und Polynomkoeffizienten nur durch wenige Standards bestimmt wurden (schlechtere statistische Absicherung) bzw. ohne Neuberechnung aus einer Grundkalibration übernommen wurden.

Vor dem Einsatz der Systeme wird eine so genannte Rekalibration durchgeführt. Dabei werden für jeden Messkanal ein Hoch- und ein Tiefwert durch Messung zweier Proben ermittelt. Die gleichen Proben wurden auch zum Kalibrationszeitpunkt gemessen.

Aus Soll- und Istwerten kann eine Rekalibrationsgerade bestimmt werden, um die das Kalibrationspolynom 'geneigt' und 'verschoben' wird. Dadurch lassen sich lineare Änderungen der Kalibrationskurve kompensieren.

Für die unter (2.) beschriebenen Geräte mit Vollspektrenerfassung ist ein Verfahren zur Kalibrationsübertragung von einem Referenzgerät auf ein beliebiges baugleiches Seriengerät aus der deutschen Patentanmeldung DE 101 52 679 bekannt. Das Verfahren wird serienmäßig erfolgreich eingesetzt. Es reduziert den Endtest- und Kalibrieraufwand bei CCD - basierten Spektrometersystemen auf die Messung einer einzigen Probe. Diese Probe wird als Anpassprobe bezeichnet. Der Grundgedanke des Verfahrens nach der Patentanmeldung DE 101 52 679 ist die Trennung der Kalibrationsfunktion in eine gerätespezifischen Funktion $K_G$ und eine geräteunabhängige Kalibrationsfunktion $K_U$.

$$\text{Errechnete Gehalte} = K_U \left( K_G \left( \text{Messwerte} \right) \right)$$

$K_G$ kann nun als eine einem Spektrometersystem zugeordnete Funktion betrachtet werden, die die Spektren diese Systems in die Spektren des Referenzsystems umrechnet. Die Kalibrationsfunktion $K_U$ ist eine konventionelle Grundkalibration in der Art, wie sie oben beschrieben wurde. Sie wird ein einziges Mal auf einem beliebigen Gerät, im folgenden Referenzgerät genannt, durchgeführt.

Die Funktion $K_G$ wird nun durch Erfassung des Spektrums der Anpassprobe für ein beliebiges Gerät G vollautomatisch bestimmt. G ist dabei ein zum Referenzgerät R baugleiches Spektrometer, was aber wegen Fertigungstoleranzen abweichende Rohspektren liefert.

Misst man eine beliebige Probe P auf G und wendet auf das zugehörige Spektrum $K_G$ an, so erhält man das gleiche Spektrum, was man für P auf R erhalten hätte. Daraus folgt, dass die Kalibrationsfunktionen $K_U$ des Referenzgerätes R verwendet werden können.

Die Notwendigkeit einer individuellen Kalibration von G entfällt somit.

Die Anwendung von $K_G$ besteht aus der Anwendung einer Abfolge von Unterfunktionen. Die wichtigsten dieser Korrekturschritte sind:

- Korrektur des Pixelversatzes

Durch unvermeidliche Ungenauigkeiten bei der Justage erscheint das Spektrum von Gerät zu Gerät um einige Pixel versetzt. Dieser Pixelversatz ist dabei nicht notwendigerweise über das Spektrum konstant, es gibt allerdings keine sprunghaften, sondern nur stetige Änderungen.

Die Korrektur wird durchgeführt, indem das gemessene Spektrum der Anpassprobe über das Referenzspektrum geschoben wird und die Position minimaler Abweichung bestimmt wird.

- Korrektur der Auflösung

Die Zeilensensoren liegen nicht über ihre gesamte Breite exakt auf der Fokalkurve. Die Fokalkurve ist stets gekrümmt, selbst bei so genannten flat field, Gittern bei denen sie streckenweise begradigt wurde. Die Zeilensensoren sind aber stets linear angeordnet. Daraus resultiert eine Verbreiterung der Spektrallinien in den defokussierten Bereichen. Die Auflösung ändert sich nicht sprunghaft, für eng benachbarte Wellenlängen gelten ähnliche spektrale Auflösungen.

- Intensitätkorrektur

Der optische Leitwert in Abhängigkeit von der Wellenlänge variiert von einem Spektrometersystem zum nächsten. Auch während der Lebenszeit eines Systems ist diese Funktion ständigen Schwankungen unterworfen. Gründe sind in Verschmutzungen optischer Grenzflächen, Solarisationseffekte (wellenlängenabhängiges Erblinden) von Komponenten (besonders von Lichtleitern), Änderungen der Atmosphäre

in Spektrometeroptiken, Variationen der Gitter-Beugungseffizienz usw. zu suchen.

Nach Anwendung der zuvor beschriebenen Berechnungsschritte wird diese Korrektur als letzte durchgeführt, da zuvor Profilverschiebungen und Auflösungsänderungen berücksichtigt werden müssen.

Die Intensitätskorrektur besteht aus der Anwendung einer Funktion, die für jedes Pixel oder kleine Pixelbereiche ein Polynom bereitstellt. Diese Polynome erlauben die Umrechnung auf G gemessener Intensitäten in Intensitäten, die man an dieser Stelle des Spektrums mit dem Referenzgerät R erhalten hätte. Auch diese Intensitätsübertragungsfunktion ändert sich nur stetig über die Wellenlänge.

Die einzelnen Korrekturschritte sind sowohl in der Patentanmeldung DE 101 52 679 als auch in der Dissertation des Erfinders 'Verfahren zur automatisierten Übertragung von Emissionsspektrometer-Kalibrationen', Duisburg 2003, detailliert beschrieben.

Es ist wichtig festzuhalten, dass Pixelverschiebung, Auflösung und Lichtstärke an einer Stelle des Spektrums prognostiziert werden können, wenn diese Parameter für die Umgebung der Stelle bekannt sind. Dieses Prinzip der Lokalität ist für die Kalibrationsübertragung entscheidend, da es unmöglich ist, eine Anpassprobe zu finden, deren Spektrum jede potentiell interessante Spektrallinie enthält.

Die Patentanmeldung DE 101 52 679 und die oben erwähnten Dissertation beschränken sich auf ein Verfahren zur Kalibrationsübertragung für Spektrometersysteme, die mit Multikanalsensoren bestückt sind. Bei solchen Systemen steht für eine zu rekalibrierende Linie die spektrale Umgebung der Anpassprobe zur Verfügung steht.

Zur Anwendung mit Spektrometersystemen, die mit Austrittspalten statt mit Multielementsensoren bestückt sind, ist das Verfahren nicht geeignet. Hier werden nur die Stellen des Spektrums gemessen, an denen die interessierenden Spektrallinien erscheinen. Die spektrale Umgebung dieser Linien wird nicht erfasst.

Es ist deshalb Aufgabe der vorliegenden Erfindung, eine Spektrometeroptik mit nicht ortsauflösenden Sensoren derart zu gestalten, dass die spektrale Umgebung der zu messenden Spektrallinien erfassbar ist. Weiter ist es Aufgabe der vorliegenden Erfindung, ein Verfahren zur vollautomatischen Übertragung von Kalibrationen zwischen derartigen Spektrometern zu schaffen.

Diese Aufgabe wird von einem Spektrometer mit den Merkmalen des Anspruchs 1 und von einem Verfahren mit den Merkmalen des Anspruchs 13 gelöst.

**Prinzip der Erfindung**

Die Erfindung geht aus von dem in der Patentanmeldung DE 101 52 679 beschriebenen Verfahren, das eine Kalibrationsübertragung für mit ortsauflösenden Sensoren bestückte Spektrometersysteme erlaubt.

Weil ein erster Aktuator zur Änderung des Einfallswinkels $\varepsilon$ zwischen dem Strahl von dem Eintrittsspalt auf das dispersive Element und der Normalen zu dem dispersiven Element vorgesehen ist, weiterhin eine Anzahl von zweiten Aktuatoren zum Verfahren der Austrittsspalte tangential zur Fokalkurve oder in Umfangsrichtung entlang der Fokalkurve vorgesehen sind, und schließlich eine Steuerung vorgesehen ist, die dazu eingerichtet ist, den ersten Aktuator und die zweiten Aktuatoren zur Durchführung einer Kalibrierung anzusteuern, kann die spektrale Umgebung der zu messenden Linien erfasst werden und jeder Austrittsspalt in die Position verfahren werden, an der die gesuchte Linie zu erwarten ist.

Um ein beliebigen Seriengeräte G in die Lage zu versetzen, für beliebige Proben gleiche Messwerte wie ein Referenzgerät R zu produzieren, sind drei Schritte durchzuführen:

1. Zunächst wird für den Eintrittspalt und jeden Austrittspalt von G ein Verschlebungsvektor auf der Fokalebene (Ebene, die durch die mittlere Gitterhöhe und die mittleren Spalthöhen festgelegt ist) bestimmt. Dieser Vektor gibt an, wohin Eintrittspalt und Austrittspalte geschoben werden müssen, damit durch jeden Austrittspalt von G der gleiche Wellenlängenausschnitt mit gleicher Auflösung tritt wie beim entsprechenden Austrittspalt von R. Präziser sollte es lauten: Die Verschiebungsvektoren werden so bestimmt, dass durch die Austrittspalte von G möglichst ähnliche Wellenlängenausschnitte mit möglichst ähnlicher Auflösung wie durch die Spalte von R fallen. Die Güte der Übereinstimmung wird gemessen und bei zu großen Abweichungen wird eine Fehlermeldung ausgegeben.

2. Danach werden Eintrittspalt und Austrittspalte über geeignete Positioniervorrichtungen um die zuvor ermittelten Vektoren auf die errechneten Sollpositionen verfahren

3. Schließlich wird für jeden Austrittspalt $A_i$ eine Intensitätskorrekturfunktion (normalerweise ein Polynom) ermittelt, die es ermöglicht, die mit $A_i$ auf G gemessenen Rohmesswerte in solche umzurechnen, wie sie für den entsprechenden Austrittspalt von R erhalten würden.

Auch die Ermittlung der Koeffizienten für die Intensitätskorrekturfunktion erfolgt so, dass Fehler der Optik, der Messelektronik oder des Anregungsgenerators von G erkannt werden.

Es wird also wie in Patentanmeldung DE 101 52 679 auch hier eine geräteabhängige Kalibrationsfunktion $K_G$ angewendet. Sie ist für einen Gerätetyp mit n Austrittspalten durch folgenden Vektor $K'_G$ eindeutig charakterisiert:

$$K'_G = ((x_e, y_e), (x_1, y_1), \cdots, (x_n, y_n), (a_{1,0}, \cdots, a_{1,m}), \cdots, (a_{n,0}, \cdots, a_{n,m})) \quad x_i, y_i, x_e, a_{j,i} \in \Re$$

**Def. 1**

Für jeden Austrittspalt $A_i$ von G enthält $K'_G$ ein Zahlenpaar $(x_i/y_i)$, das einen Vektor auf der Fokalebene definiert, der angibt, wohin $A_i$ verschoben werden muss, um mit $A_i$ den gleichen Spektralbereich mit gleicher Auflösung zu erfassen wie mit dem entsprechenden Austrittspalt von R. Es wird zusätzlich ein Zahlenpaar $(x_e, y_e)$ errechnet, das die notwendige Verschiebung des Eintrittspaltes auf der Fokalebene definiert. Schließlich enthält K'$_G$ für jeden Austrittspalt A$_i$ ein m-Tupel (a$_{i,0}$ ... a$_{i,m}$) das ein Polynom m-ten Grades (Intensitätskorrekturfunktion) definiert. Mit Hilfe dieser Intensitätskorrekturfunktion werden, nachdem die Ein- und Austrittspalte von G auf Sollposition gefahren wurden, die Messwerte von G auf das Niveau von R umrechnen.

Es wird gezeigt werden, dass sich die Struktur nach Def. 1 zu folgender Menge vereinfachen lässt:

$$K'_G = ((x_e, y_e), y_1, ..., y_n, (a_{1,0}, a_{1,1}), ..., (a_{n,0}, a_{n,1})) \quad x_l, y_l, x_e, a_{j,l} \in \Re \qquad \text{Def. 2}$$

Zu jedem Austrittspalt wird statt eines Zahlenpaares, das eine Position auf der Fokalebene beschreibt, nur eine Differenz mit $y_i$ zur gegenwärtigen Position in Richtung der Fokalkurve ermittelt. ($x_e$,$y_e$) beschreibt wieder den Verschiebungsvektor des Eintrittspaltes.

Als Intensitätskorrekturpolynome reichen in der Regel lineare Funktionen aus, die für jeden Austrittspalt A$_i$ durch das Zahlenpaar (a$_{i,0}$, a$_{i,1}$) definiert sind.

Nach Ermittlung von K'$_G$ und anschließender Einstellung der Spaltpositionen ist das Gerät G bereit zur Messung beliebiger Proben. Die Messwertbearbeitung ist dann gegenüber der konventionellen Messwertbearbeitung dadurch zu erweitern, dass unmittelbar nach der Erfassung der Rohmesswert als Argument in die Intensitätskorrekturfunktion eingesetzt wird. Anschließend wird mit dem durch die Korrekturfunktion modifizierten Messwert weitergerechnet. Im Folgenden wird detailliert erklärt, wie K'$_G$ ermittelt wird.

**Ausführung der Erfindung**

*Schritt 1 - Bestimmung der Spalt-Verschiebungsvektoren*

Um die Verschiebungsvektoren bestimmen zu können, muss zunächst die spektrale Umgebung um jeden Austrittspalt zugänglich gemacht werden. Das geschieht dadurch, dass das optische System so erweitert wird, dass sich entweder der Eintrittspalt entlang der Fokalkurve bewegen lässt oder alternativ eine drehbare planparallele Quarzplatte hinter dem Eintrittspalt angebracht wird.

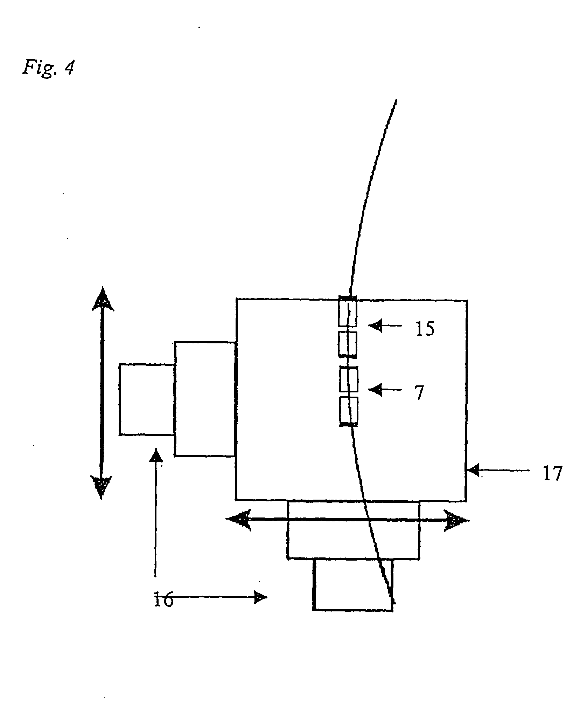

Fig. 4 zeigt das Prinzip für einen beweglichen Eintrittspalt. Dabei wird der in Fig. 2 markierte Eintrittspaltbereich (22) einer Optik in Draufsicht gezeigt. Der Eintrittspalt (7) ist auf einem durch zwei Schrittmotoren (16) angetriebenen Kreuztisch (17) montiert, der es erlaubt, den Eintrittspalt entlang der Fokalkurve (6) auf eine neue Position (12) zu verschieben. Dadurch ändert sich der Einfallwinkel ε (23) zwischen Gitternormal (13) und der Strecke Eintrittspaltmitte-Gittermitte. Es gilt die als Gittergleichung bekannte Beziehung:

$$\lambda = \frac{\sin(\alpha) + \sin(\varepsilon)}{N * G} \qquad \qquad \Box\Box \quad (\text{Gl. 1})$$

Dabei bezeichnen:

α    den Ausfallwinkel

ε    den Einfallwinkel

λ    die Mitte des Wellenlängenbereichs (in mm), der durch den Austrittspalt fällt

G    die Anzahl der Gitterfurchen pro mm

N    die Beugungsordnung

Der Spalt muss dabei den Abstand *la* von der Gittermitte haben

$$la = R * \cos(\alpha) \qquad \text{(Gl. 2)}$$

Bedeutung der zusätzlichen Symbole:

*R* Durchmesser des Rowlandkreises

*la* Bildschnittweite (Länge der Strecke Austrittspaltmitte/Gittermitte)

Bei gegebenem Gitter und festem Ausfallwinkel α (Winkel zwischen Gitternormale und der Strecke Austrittspaltmitte-Gittermitte) ändert sich somit bei Variation von ε die Mittenwellenlänge des durch den Austrittspalt tretende Wellenbereichs.

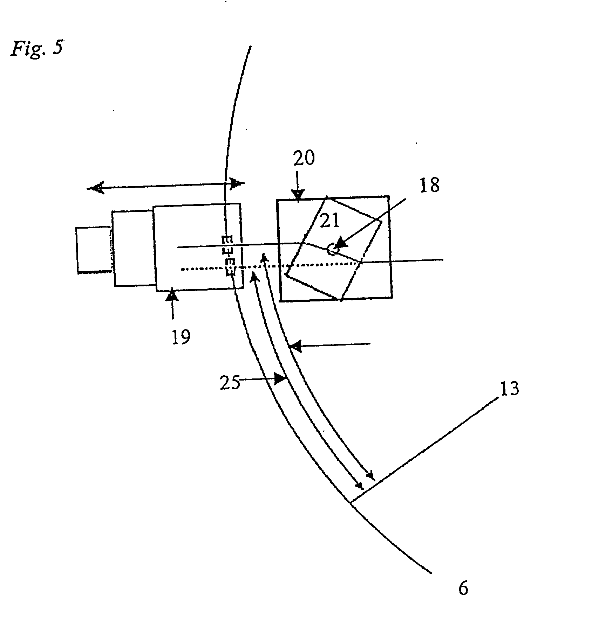

Fig. 5 verdeutlicht, wie sich auch mit einer hinter dem Eintrittspalt montierten drehbaren planparallelen Quarzplatte (Refraktor) der Einfallwinkel ε (23) ändern lässt.

Um eine softwaregesteuerte, präzise Drehung zu gewährleisten, ist der Refraktor (21) auf der Achse eines Schrittmotors (18) befestigt.

Zusätzliche Mechanik erlaubt eine Verschiebung des Eintrittspaltes in Richtung Gitter:

Der Eintrittspalt (7) befindet sich auf einem Linearvorschub (19) der von einem weiteren Schrittmotor (20) angetrieben wird. Diese Zusatzmechanik wird jedoch nur in Verbindung mit der Auflösungskorrektur verwendet.

Die durch den Eintrittspalt tretende Strahlung (14) erscheint nach Austritt aus dem Refraktor um eine Strecke δ parallel verschoben. Der Strahl hat nun die gleiche Richtung, die er hätte, wäre er - ohne Refraktor - durch den auf der Fokalkurve verschobenen Eintrittspalt (15) gekommen. Der Einfallwinkel ε bei Refraktorausrichtung senkrecht zum einfallenden Strahl (23) ist in einen Einfallwinkel ε' (25) geändert. δ hängt von der Refraktordicke d , der Brechzahl des Refraktormaterials n und dem Anstellwinkel γ des Refraktors ab:

$$\delta = d \sin \gamma \; \left(1 - \frac{\cos \gamma}{\sqrt{n^2 - \sin^2 \gamma}}\right) \qquad \text{(Gl. 3)}$$

(Herleitung der Beziehung siehe Bergmann Schäfer, Lehrbuch der Experimentalphysik Band III: Optik, de Gruyter, Berlin 1978, S. 40f)

Durch schrittweises Verfahren des Eintrittspalts / Verdrehen des Refraktors mit jeweils folgender kurzer Messzeit lässt ich nun sequentiell ein Spektralbereich erfassen. Die zu messende Spektrallinie sollte in der Nähe der Mitte des Verfahr- bzw. Verdrehbereichs liegen. Es bietet sich an, spektral äquidistante Schrittweiten in der Größenordnung der spektralen Spaltweite des Austrittspaltes zu wählen (z. B. Schrittweiten von 5 pm). Die einzelnen Messwerte werden sequentiell gespeichert. Man erhält nun ein nach Wellenlängen geordnetes Feld von Messwerten, das so behandelt werden kann wie ein Feld von Messwerten, das aus einem zusammenhängenden Pixelbereich einer Optik mit Multikanalsensor stammt.

Bezeichnet $\lambda_{Ri}$ die Mittenwellenlänge, die durch den i-ten Austrittspalt des Referenzgerätes R tritt und $\lambda_{Gi}$ die Mittenwellenlänge, die durch den entsprechenden Austrittspalt eines baugleichen Gerätes G tritt, soll $\lambda_{Ri} - \lambda_{Gi}$ als Wellenlängenversatz des i-ten Austrittspaltes von G bezeichnet werden.

Der Verfahrbereich ist nun so zu wählen, dass der erfasste Wellenlängenbereich groß ist im Vergleich zum dem maximal zu erwartenden Wellenlängenversatz. Eine geeignete Dimensionierung für den Verfahrbereich bei einem maximalen zulässigen Wellenlängenversatz von 0,1 nm ist 1,1 nm. Es ergibt sich so ein überlappender Wellenlängenbereich von mindestens 1 nm um jeden Austrittspalt, der sowohl bei G als auch bei R erfasst wird.

*Bestimmung des Wellenlängenversatzes*

Die in der Patentanmeldung DE 101 52 679 unter der Überschrift ‚Pixelversatz' beschriebenen Algorithmen können nun benutzt werden, um den Wellenlängenversatz zu bestimmen. Der dort verwendete Begriff *Pixel i* ist durch den Begriff *Messzeit i* zu ersetzen.

Ausführlich sind geeignete Algorithmen auch in der oben erwähnten Dissertation des Erfinders auf den Seiten 88 bis 99 sowie 138 bis 147 erläutert.

Algorithmus 1 zeigt einen der dort beschriebenen Algorithmen, der auf der Differenzmethode beruht.

```
TryOffset := - Maximaler  Offset; MinFehler:=MaxReal;
```

**Bestimmung der Abweichung für den Offset, der durch die Laufvariablen**

**TryOffset bestimmt ist**

```
Fehlersumme:=0;          // R[ ] : Spektrum des Ref.gerätes für Anpassprobe
i := LinkerRand;         // G[ ] : Spektrum des zu rekalibrierenden Gerätes
Solange (i<=RechterRand) und  (FehlerSumme<MinFehler)
    Fehlersumme:=Fehlersumme+abs(R[i]-G[i+TryOffset]);    i := i+1 ;
Ende // Solange ..
Wenn FehlerSumme<MinFehler
    MinFehler:=FehlerSumme;     BesterOffset:=TryOffset;
Ende // Wenn
```

```
TryOffset := TryOffset + 1;
```

nein

TryOffset <= MaxOffset

ja

BesterOffset enthält nun die Verschiebung in ganzen  Schritten (Messzeitnummern), die angewandt auf das Spektrum von G zu einer bestmöglichen Überdeckung der Spektren von *R* und *G* führt.

**Algorithmus 1 Optimaler Offset mit Differenzbildalgorithmus**

Die Differenz der Spektren eines Austrittspaltes von zu kalibrierendem Gerät G und Referenzgerät R werden gebildet. Dabei wird der Term

$$|R[1]\text{-}G[1\text{+}TryOffset]| + \ldots + |R[1]\text{-}G[1\text{+}TryOffset]|$$

für- *MaxOffset<TryOffset<MaxOffset* errechnet. MaxOffset wird so gesetzt, dass die maximal zu erwartende Verschiebung zwischen Austrittspalt von G und R erkannt werden kann.

Der Algorithmus schiebt also, bildlich gesprochen, die Spektren übereinander und erhält nach jedem Verschiebungsschritt (*TryOffset*) eine Gesamtabweichung (*Fehler-Summe*), die aussagt, wie gut die Übereinstimmung bei dieser Verschiebung ist. Der gesuchte Offset (*BesterOffset*) ist dann gefunden, wenn die Spektrendifferenz minimal wird. Aus Gl. 1 bis Gl. 3 und dem Rowlandkreisdurchmesser lässt sich errechnen, um wie viel mm sich das Spektrum im Austrittspalt bei einer Verschiebung des Eintrittspalts um diesen Offset verschiebt.

*Bestimmung und Korrektur der Auflösung*

Die Linien der Anpassprobe, die in der Schnittmenge der von G und R um einen Austrittspalt $A_i$ erfassten Spektralbereiche liegen, können benutzt werden, um die Auflösung von G und R zu vergleichen. Bei allen Linien in dieser Schnittmenge wird die Halbwertsbreite bestimmt. Im Idealfall sind die Halbwertsbreiten der Linien im Spektrum von G gleich mit den Halbwertsbreiten der korrespondierenden Linien von R. Kommt es zu Abweichungen, können folgende Ursachen vorliegen:

1. Die Breiten der Eintrittspalte von G und von R stimmen nicht überein

2. Die Breite des betrachteten Austrittspalts von G und von R stimmt nicht überein

3. Eintritt- oder Austrittspalte sind nicht exakt senkrecht zur Fokalebene ausgerichtet

4. Eintritt- oder Austrittspalte stehen nicht im Fokus

Die Spaltbreiten können vor Montage z.B. durch Begutachtung des Beugungsbilds im Laserlicht auf Maßhaltigkeit kontrolliert werden. Es ist außerdem keine Änderungen der Spaltweiten über die Lebensdauer des Geräts zu erwarten. Veränderungen der Spaltweiten müssen deshalb im Rahmen der Auflösungskorrektur nicht kompensiert werden.

Die aufrechte Stellung der Spalte wird durch Montage mit geeigneten Lehren einmalig sichergestellt und dadurch kontrolliert, dass das Spektrum bei abgedeckter oberer Spalthälfte sich mit dem bei abgedeckter unterer Spalthälfte deckt. Auch die Vertikalität der Spalte ändert sich bei zweckmäßiger Dimensionierung der Spaltträger während der Lebensdauer des Gerätes nicht mehr. Vertikalitätsänderungen der Spalte brauchen deshalb durch die Auflösungskorrektur nicht ausgeglichen zu werden.

Es sei angemerkt, dass Weiten- und Vertikalitätsänderungen nicht korrigiert werden können. Sie werden aber, wenn sie z.B. als Transportschaden doch auftreten, im Rahmen des in Algorithmus 2 skizzierten Verfahrens (Bestimmung optimaler Austrittspalt-Fokalpositionen) erkannt. In diesem Fall ist eine Reparatur des optischen Systems erforderlich.

Durch Temperaturänderungen kann sich die optische Bank ausdehnen oder zusammenziehen, wodurch sich die auf ihr montierten Spalte vom Gitter entfernen bzw. dem Gitter nähern. Luftdruckänderungen haben ähnliche Wirkung, ein erhöhter Luftdruck verschiebt die Fokalkurve zum Gitter hin. Eine Verstellung der Fokalpositionen von Eintritt- und Austrittspalten kann daher sinnvoll sein, besonders dann, wenn ein optisches System unter atmosphärischen Druck über einen weiten Temperaturbereich betrieben werden soll und die optische Bank z.B. aus Gewichtsgründen so beschaffen ist, dass es zu Längenausdehnungen von einigen zehntel Millimeter kommen kann.

Beispiel: Besteht die optische Bank aus Aluminium, beträgt die Längenänderung bei Temperaturänderung von 20°C und einem Gitter/Spalt-Abstand von 500 mm ca. 0,27 mm.

Um die optimale Austrittspaltposition bestimmen zu können, muss sich der Eintrittspalt zur Gittermitte hin bzw. von der Gittermitte weg bewegen lassen. Der mögliche Verfahrweg v in Gitterrichtung betrage 1 mm. Es ist festzuhalten, dass kleine Abweichungen von der Fokalkurve die Halbwertsbreiten nur geringfügig verändern. Erfahrungsgemäß führt eine Änderung der Linien-Halbwertsbreiten von 10% (nach Intensitätskorrektur, siehe unten) zu keinem nennenswerten Analysenfehler. Es lässt sich daher eine Schärfentiefe s festlegen, um die ein perfekt fokussierter Austrittspalt verschoben werden darf, ohne das mit ihm aufgenommene Spektrum signifikant zu verbreitern.

Mit Algorithmus 2 auf der folgenden Seite lässt sich die Spaltdefokussierung für die Austrittspalte i des Gerätes G ermitteln.

Dabei nutzt man die Tatsache, dass Defokussierungen eines Austrittspaltes durch Verschiebung des Eintrittspaltes kompensiert werden können. Für Rowlandkreisgitter gilt die Beziehung:

$$\frac{\cos^2(\alpha)}{la} - \frac{\cos(\alpha)}{R} + \frac{\cos^2(\varepsilon)}{le} - \frac{\cos(\varepsilon)}{R} = 0 \qquad (\text{Gl. 4})$$

Dabei bezeichnen

R Durchmesser des Rowlandkreises

le Eintrittschnittweite (Länge der Strecke Eintrittspaltmitte/Gittermitte)

la Bildschnittweite (Länge der Strecke Austrittspaltmitte/Gittermitte)

ε Einfallwinkel (Winkel zwischen Strecke Eintrittspaltmitte/Gittermitte und Gitternormal)

α Austrittwinkel (Winkel zwischen Strecke Austrittspaltmitte/Gittermitte und Gitternormal)

```
// Initialisierungen
Für alle Austrittspalte Austrittspalte A_i
        Beste_Spaltbreite[i]:=Fehlerhafte_Breite
        Bester_Fokaloffset[i]:=0
Ende // Für alle-Schleife
// Bestimmung des Fokaloffsets
Fokalposition_Eintrittspalt := v/2
Solange Fokalposition_Eintrittspalt >-v/2
   Verfahre Eintrittspalt auf Fokalposition_Eintrittspalt
   Nimm das Spektrum der Anpassprobe P um die Austrittspalte A_i auf
   und speichere es in Teilspektrum[i]
   Bestimme Wellenlängenversatz wie im vorigen Abschnitt beschrieben
   Für alle Austrittspalte A_i
        Bestimme den Wellenlängenversatz für Austrittspalt A_i mit Hilfe
        Bestimme den Wellenlängenbereich, in dem sich das auf G
```

gemessenen Spektrum und das für den Austrittspalt gespeicherte

Spektrum des Referenzgerätes überschneiden

Errechne Mittlere_Linienbreite im Überschneidungsbereich

des gemessen Spektrums

**Wenn** Beste_Spaltbreite[i]> Mittlere_Linienbreite **dann**

Beste_Spaltbreite[i]:= Mittlere_Linienbreite

Bester_Fokaloffset[i]:=Fokalposition_Eintrittspalt

**Ende** // des Wenn-Blocks

**Ende** // der Für alle - Schleife

Fokalposition_Eintrittspalt := Fokalposition_Eintrittspalt − s

**Ende** // der Solange-Schleife

// Bewertung des Ergebnisses

**Für alle** Austrittspalte $A_i$

Errechne die mittlere Linienbreite, die die Linien im Spektrum

des Referenzgerätes um Ai haben und weise den Wert

Mittlere_Linienbreite_Ref zu. Dabei dürfen nur Linien aus dem

überschneidenden Bereich berücksichtigt werden

Tolerierte_Linienbreite:=Mittlere_Linienbreite_Ref*Toleranzfaktor

// Kleine Überschreitungen werden toleriert

**Wenn** Mittlere_Linienbreite>Tolerierte_Linienbreite **dann**

Fehlermeldung: Auflösungskorrektur für Austrittspalt i nicht möglich

**Sonst**

Berechne mit Hilfe von Gl. 4 die Soll-Austrittspaltposition

**Ende** // Wenn-Block

**Ende** // Für alle-Schleife

Algorithmus 2: Bestimmung der Austrittspalt-Fokaloffset

Wird eine Eintrittspaltposition gefunden, bei der mit der momentanen Position des Austrittspaltes das Spektrum um diesen Austrittspalt optimal aufgelöst ist, kann mit Hilfe von Gl. 4 errechnet auch für beliebige andere fokale Eintrittspaltstellungen eine Austrittspaltposition mit optimaler Ausflösung errechnet werden.
Gelingt es, bei den während der Fertigung herrschenden Druck- und Temperaturverhältnissen die Austrittspalte ausreichend genau (also mit einer Abweichung kleiner s) zu fokussieren, können spätere Luftdruck- und Temperaturschwankungen weitgehend durch Fokussierung des Eintrittspalts kompensiert werden.

Dazu ein Rechenbeispiel:

Eine Rowlandkreisoptik sei mit einem Gitter mit Rowlandkreisdurchmesser 750 mm und Gitterstrichzahl G von 2700/mm bestückt. Der Einfallwinkel betrage 30°. Die optische Bank sei aus Aluminium gefertigt. Die Austrittspaltweite wird mit 30 μm angenommen. Die kürzeste zu messende Wellenlänge sei Fe 187,7 nm, die längste W 400,8 nm.
Dann ergeben sich unter Verwendung von Gl. 1 und Gl. 2 folgende Winkel und Schnittweiten (Abstände Spalt/ Gittermitte):

| | Winkel | Soll-Schnittweite |
|---|---|---|
| Eintrittspalt | 30° | 649,5 |
| Austrittspalt Fe187,7 nm | 0,4° | 750 |
| Austrittspalt Ni 471,4 nm | 35,6° | 609,8 |

Die Spalte seien bei Zimmertemperatur genau entsprechend obiger Winkel und Schnittweiten montiert. Erhöht man die Temperatur um 20°C, erhöhen sich die Abstände zwischen Spalt und Gittermitte wegen der thermischen Ausdehnung der optischen Bank.

Die Verlängerung beträgt für den Eintrittspalt 0,31 mm, für den Fe-Austrittspalt 0,36 mm und für den Ni Austrittspalt 0,29 mm.

Um die Nickellinie scharf zu stellen, müsste der Eintrittspalt nach Gl. 4 um 0,60 mm zur Gittermitte hin verschoben werden, die Eintrittschnittweite beträgt dann 649,23 mm.

Die Eisenlinie wird bei einer Verschiebung um 0,666 mm und einer Eintrittschnittweite von 649,16 mm optimal scharf. Der Unterschied zwischen dem Optimum für Fe und dem Optimum für Ni ist gering. Wählt man den Mittelwert, eine Verschiebung von 0,633 mm, so ergibt sich dann nach Gl. 4 bei Fe 187,7 nm und bei Ni 471,4 nm je eine Defokussierung von 0,033 mm. Bei der Fe 187,7 nm liegt der Spalt um diesen Betrag hinter der Fokalkurve, bei Ni 471,4 um die gleiche Strecke davor. Für alle Austrittspalte zwischen den beiden Extremen ist die Defokussierung geringer. Unter Verwendung des Strahlensatzes sieht man, dass die Spaltverbreiterung $v$ durch eine Defokussierung $D$ bei einer Ausleuchtweite des Gitters $W$ näherungsweise

$$v = \frac{D * W}{la} \qquad (Gl.\ 5)$$

beträgt. $la$ bezeichnet dabei wieder die Bildschnittweite des Austrittspaltes.

Wird das Gitter 30 mm breit ausgeleuchtet, verbreitern sich die Spalte im ungünstigsten Fall nach Gl. 5 von 30 auf 31,3 $\mu$m. Eine so geringe Spaltverbreiterung spielt in der Praxis keine Rolle mehr.

Das Beispiel zeigt, dass es ausreicht, den Fokus mit Hilfe des Eintrittspaltes zu korrigieren.

Man beachte, dass hier von einem ungünstigen Material der optischen Bank ausgegangen wurde. Ist die optische Bank aus Stahl, fallen wegen dessen geringerer Längenaus-dehnungskoeffizienten die Restfehler auf weniger als die Hälfte.

Verzichtet man auf eine individuelle Fokusseinstellung der Austrittspalte, ist es sinnvoll, für jeden Austrittspalt den Restfehler nach Fokussierung des Eintrittspaltes zu überprüfen.

Für jeden Austrittspalt $A_i$ errechnet Algorithmus 2 eine optimale Eintrittspaltposition optimaler Auflösung. Sind die Austrittspalte korrekt montiert, müssen die optimalen Eintrittspaltpositionen über einen weiten Temperaturbereich eng beieinander liegen. In unserem Beispiel bleiben die maximalen Abweichungen zwischen einzustellender Eintrittspaltposition und optimaler Eintrittspaltposition für einen beliebigen Austrittspalt unter 0,034 mm. Wird nun eine größere Abweichung festgestellt, sind die Austrittspalte nicht korrekt in den Fokus gestellt. Diese Kontrolle ist Bestandteil der Überprüfung der Kalibrationsfähigkeit. Unmittelbar nach der Geräteproduktion kann man sich so davon vergewissern, dass alle Austrittspalte richtig montiert sind. Während der Lebensdauer des Gerätes sollte dann bei gleichen Temperatur- und Druckverhältnissen sich die Lage der Austrittspalte zur Fokalkurve nicht mehr ändern.

Der Kontrollalgorithmus sollte trotzdem bei jeder Kalibrationsanpassung durchlaufen werden, um Fehlerzustände, wie sie z.B. durch mechanische Beschädigungen hervorgerufen werden, erkennen zu können.

*Schritt 2 - Einstellung der Spaltpositionen*

In Schritt 1 wurden folgende Parameter errechnet:

• Eine vorzeichenbehaftete Strecke, um die der Eintrittspalt entlang der Fokalkurve zu verschieben ist

• Eine vorzeichenbehaftete Strecke, um die der Eintrittspalt in Gitterrichtung zu verschieben ist

• Für jeden Austrittspalt eine vorzeichenbehaftete Strecke für eine Verschiebung entlang der Fokalkurve

Zusätzlich lieferte Schritt 1 die Aussage, ob es möglich ist, die Spalte so zu stellen, dass durch die Austrittspalte des Gerätes G die gleichen Wellenlängenbereiche mit gleicher Auflösung wie bei einem Referenzgerät R fallen, von dem die Kalibrationen übernommen werden sollen. Nur wenn das der Fall ist, können Kalibrationen von R auf G übertragen werden. Die Kontrolle ist Bestandteil der Beurteilung der Kalibrationsfähigkeit von G.

Zwei Varianten von Mechaniken zur Einstellung der Eintrittspaltpositionen wurden bereits in Schritt 1 vorgestellt. Nach der in Fig. 4 gezeigten Mechanik wird der Eintrittspalt (7) über einen durch Schrittmotoren angetriebenen Kreuztisch (17) auf die gewünschte Position gefahren.

Alternativ wurde in Fig. 5 eine Mechanik zur Eintrittspaltpositionierung vorgestellt, die, statt den Eintrittspalt entlang der Fokalkurve zu verschieben, den Einfallwinkel durch Drehung eines Refraktors realisiert. Die Fokussierung (Verschiebung in Gitterrichtung) wird durch Verfahren des Schlittens eines Linearvorschubes (19) realisiert, der den Eintrittspalt (7) trägt.

Es sei bemerkt, dass Schrittmotoren mit Schrittwinkeln unter 0,9° nicht gängig sind. Um trotzdem die erforderliche Anzahl von Messpositionen mit dem Refraktor-Schrittmotor ausführen zu können, kann es erforderlich sein, dem Schrittmotor ein Getriebe mit hohem Untersetzungsverhältnis nachzuschalten und den Refraktor auf der Abtriebsachse des Getriebes zu montieren.

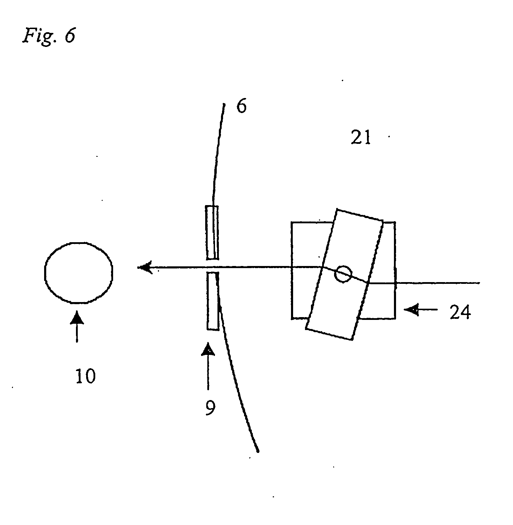

Wie unter Schritt 1 erklärt wurde, muss für jeden Austrittspalt eine Bewegung entlang der Fokalkurve realisiert werden können, um die Fehler der relativen Austrittspaltlagen, wie sie in Schritt 1 berechnet wurden, ausgleichen zu können. Der Verfahrbereich dieser Bewegung ist klein gegenüber dem Verfahrbereich des Eintrittspaltes, und liegt, wie bereits oben erwähnt, in der Größenordnung 0,1 mm. Fig. 6 zeigt eine mögliche Realisierung. Ein Refraktor (21) ist auf der Achse eines Servomotors (24) montiert und wird durch diesen gedreht. Alternativ kann auch ein Schrittmotor verwendet werden. Servomotoren haben aber den Vorteil, dass sie in kleinen Bauformen zu günstigen Preisen erhältlich sind. Üblicherweise erlauben sie zudem eine absolute Positionierung, wobei diese durch Anlegen einer Wechselspannung erfolgt, deren Puls-/Pausenverhältnis die einzustellende Position wiedergibt.

Möglichkeiten zur direkten Positionierung des Austrittspaltes lassen sich mit Hilfe von Piezo-Aktoren, Galvanometern und temperaturkontrollierten Bimetallstreifen realisieren. Auch eine Verschiebung von Austrittspalten über einen Linearvorschub entlang de Fokuskurve ist möglich.

*Schritt 3 - Intensitätskorrektur*

Am Ende von Schritt 2 ist gewährleistet, dass durch die Austrittspalte des zu kalibrierenden Gerätes G die gleichen Wellenlängenbereiche mit gleicher Auflösung treten wie bei dem Referenzgerät R, dessen Kalibrationen übernommen werden sollen. Damit ist aber nicht gesagt, dass bei G und R - für eine gegebene Probe sowie identischer Einstellung der Anregungsquelle - die gemessene Strahlungsintensitäten gleich sind. Ursache dafür sind Unterschiede in den optischen Leitwerten transparenter Komponenten, Exemplarstreuungen bei den Beugungseffizienten der Gitter, Verschmutzungseffekte und Unterschiede in der Sensorempfindlichkeit.

Die einfachste Methode der Intensitätskorrektur besteht aus einer Zweipunktrekalibration für jeden Kanal (Unter Kanal soll die Einheit Austrittspalt/Sensor verstanden werden), wie sie üblicherweise verwendet wird, um Kanäle individuell kalibrierter Geräte wieder auf das Intensitätsniveau zum Kalibrationszeitpunkt zu bringen.

Dabei wird ein Satz von Rekalibrationsproben so zusammengestellt, dass jedem Kanal zwei Proben zugeordnet werden. Eine der Proben hat eine Konzentration, die im unteren Drittel des Kanal-Arbeitsbereichs liegt, die Konzentration der zweiten Probe liegt im oberen Arbeitskanaldrittel. Es wird eine lineare Funktion errechnet (siehe Algorithmus 3).

// TSoll[i] Wert für Tiefprobe für i-ten Austrittspalt, gemessen auf R

// Hsoll[i] Wert für Hochprobe für i-ten Austrittspalt, gemessen auf R

// TIst[i] Wert für Tiefprobe für i-ten Austrittspalt, gemessen auf G

// HIst[i] Wert für Tiefprobe für i-ten Austrittspalt, gemessen auf G

// Faktor[i] Faktor der Rekalibrationsgeraden für Spalt i

// Offset[i] Offset der Rekalibrationsgeraden für Spalt i

**Für alle** Austrittspalte i

Faktor[i]:=(HSoll[i]-TSoll[i])/(HIst[i]-TIst[i]);

Offset[i]:=(HSoll[i]*TIst[i]-HIst[i]*TSoll[i])/(TIst[i]-HIst[i]);

**Ende**


**Algorithmus 3 Bestimmung einer Rekalibrationsgeraden zur Intensitätskorrektur**

Die auf G gemessenen Rohmesswerte des i-ten Austrittspaltes *MW[i]* werden dann nach der Formel

$$MWKorr\ [i] := MW\ [i]\ ^*\ Faktor\ [i] + \mathit{Offset}\ [i] \qquad\text{(Gl. 6)}$$

in Messwerte *MWKorr[i]* umgerechnet, die dem Intensitätsniveau von G entsprechen.

Das Verfahren hat aber einen gravierenden Nachteil: Für jeden Austrittspalt werden nur ein Tiefproben- und ein Hochprobenistwert gemessen und es wird unterstellt, dass sich die Intensitäten von G mittels einer linearen Funktion in die von R überführen lassen. Meist trifft diese Annahme auch zu. Fehlfunktionen von G werden aber nicht erkannt:

Dazu ein Beispiel: Die Messelektroniken (Integratoren) von R und G seien dazu in der Lage, Messwerte bis 1.000.000 zu erfassen. Auf R wird für einen Kanal i ein Tiefprobenwert von 80.000 und ein Hochprobenwert von 800.000 gemessen. G sei doppelt so lichtstark. Für die Tiefprobe wird auf G nun 160.000 gemessen, für die Hochprobe aber wegen der Sättigungsgrenze nur 1.000.000. Statt eines Faktors von 0,5 und eines Offsets von 0 wird ein Faktor von 0,86 und ein Offset von - 57.140 errechnet. Eine weiter potentieller Fehler, der bei Verwendung des Algorithmus 3 nicht erkannt wird, ist ein nicht linear messende Elektronik in Gerät G.

Es ist deshalb günstiger, ein Verfahren analog zu dem in der Patentanmeldung DE 101 52 679 für Optiken mit Multikanalsensoren vorgestellten zu verwenden. Algorithmus 4 skizziert diese Methode. Durch Verfahren des Eintrittspaltes wird das Spektrum um die Austrittspalt-Normalposition erfasst. Aus Schritt 2 ist dabei bekannt, zwischen welchen Eintrittspalt-Extrempositionen von G Wellenlängen gemessen werden können, die auch von R vorliegen. Wie oben erwähnt, ergibt sich so ein Bereich von typisch 1 nm, der bei Verfahrschritten von 5 pm in 200 Schritten abgefahren wird. In diesem Bereich liegen bei geeigneter Wahl der Anpassprobe mehrere Spektrallinien. An jeder der 200 Positionen wird eine Messung durchgeführt. Eine Messzeit braucht dabei nur wenige Funken zu integrieren. Es ist aber wichtig sicherzustellen, dass eine Messzeit stets aus der gleichen Anzahl von Funken besteht. Anschließend werden die korrespondierenden Intensitäten des Spektrums von G und des Spektrums von R gegeneinander aufgetragen. Sind Optik, Anregungsgenerator und Messelektronik von G funktionsfähig, sollten alle Punkte in der Nähe einer Gerade liegen, die durch den Punkt (0,0) führt. Der Verlauf der Rekalibrationsgeraden wird durch eine lineare Regression ermittelt. Reststreuung, Steigung und Offset dürfen vorgegebene Grenzen nicht überschreiten. Die Kontrolle dieser Grenzen ist Bestandteil der Überprüfung der Kalibrationsfähigkeit. Es sei bemerkt, dass Abweichungen der Anregungsparameter zwischen G und R zu einer erhöhten Reststreuung führen. Die Ursache liegt darin, dass auch eng benachbarte Linien stark unterschiedlich auf eine Änderung von Anregungsstrom und -dauer reagieren. Innerhalb des Verfahrbereichs liegen aber, wie oben erwähnt, mehrere Spektrallinien. Die Thematik wird in der Dissertation des Erfinders, S. 127f detailliert behandelt.

**Für alle** Messpunkte m im Spektrum des i-ten Austrittspaltes von G,

die einen korrespondierenden Messpunkt im Spektrum des i-ten Austrittspaltes von R haben:

*Bilde Zahlenpaare für korrespondierende Datenpunkte aus G und R;*

*Führe eine lineare Regression über die Menge dieser Paare durch;*

**Wenn** Reststreuung der Regressionsrechnung > Maximale Reststreuung

*Gib Fehlermeldung aus, Gerät G ist nicht kalibrationsfähig*

**sonst**

*Speichere Faktor und Offset für Austrittspalt i*

**ende** // Wenn ..

**Ende** // Für ..

**Algorithmus 4: Intensitätskorrektur**

Die Umrechnung der auf G gemessenen Intensitäten in das Niveau von Gerät R erfolgt wieder durch Anwendung von Gl. 6.

Nachdem die Parameter der Intensitätskorrektur berechnet sind, wird der Eintrittspalt wieder auf die in Schritt 1 ermittelte Position gefahren. Das Gerät G ist nun messbereit für unbekannte Proben. Nach der Aufnahme der Rohmesswerte sind diese in Gl. 6 einzusetzen. Das Ergebnis sind gleiche Messwerte, die auch R für die gleiche Probe liefern würde. Die Kalibrationen von R können somit verwendet werden.

Mit positionierbaren Spalten bestückte Spektrometeroptik und Verfahren zur vollautomatischen Übertragung von Kalibrationen zwischen mit solchen Optiken bestückten Spektrometersystemen

**Bezugszeichenliste**

(1) Stativ
(2) Probe
(3) Gegenelektrode
(4) Anregungsgenerator
(5) Optisches System
(6) Fokalkurve
(7) Eintrittspalt
(8) Konkavgitter
(9) Austrittspalt
(10) Photovervielfacherröhren
(11) Multikanalsensoren
(12) Neue Eintrittspaltposition
(13) Gitternormale
(14) Durch den Eintrittspalt tretende Strahlung
(15) Verschobene Eintrittspaltposition
(16) Schrittmotoren
(17) Kreuztisch
(18) Schrittmotorachse

(19) Linearvorschub
(20) Schrittmotor
(21) Refraktor
(22) Eintrittspaltbereich
(23) Einfallwinkel ε
(24) Servomotor
(25) Geänderter Einfallwinkel ε'
(26) Strecke Austrittspalt/Gittermitte
(27) Direkter Strahlungsweg oder Lichtleiter

**Patentansprüche**

1. Verfahren zur Kalibrierung von Spektrometersystemen mit einem Strahlengang von einer Strahlenquelle zu einer Anzahl von nicht ortsauflösenden elektrooptischer Sensoren, wobei der Strahlengang einen Eintrittsspalt, ein dispersives Element und eine Anzahl von auf einer Fokalkurve angeordneten Austrittspalten aufweist, **gekennzeichnet durch** folgende Schritte:

a. Ermitteln einer geräteunabhängigen Kalibrationsfunktion $K_U$ auf einem Referenzspektrometer R;

b. Übertragen der geräteunabhängigen Kalibrationsfunktion $K_U$ auf ein zu kallbrierendes Spektrometer G;

c. Ermitteln jeweils eines Verschiebungsvektors für den Eintrittsspalt und für die Austrittsspalte des Spektrometers G **durch** sequentielles Erfassen der spektralen Umgebung der verwendeten Austrittspalte **durch** Änderung des Optik-Einfallswinkels, und Verwendung der so erhaltenen Umgebungsinformationen zur Berechnung eines den Zustand des Spektrometersystems G beschreibenden Vektors $K'_G$;

d. Verfahren des Eintrittsspalts und der Austrittsspalte in Sollpositionen in Abhängigkeit von dem Verschiebungsvektor $K'_G$, der Sollpositionen für Eintrittspalt und Austrittsspalte enthält, wobei die Sollpositionen angeben, wohin der Eintrittsspalt und die Austrittspalte verschoben werden müssen, damit **durch** die Austrittspalte der Optik $O_G$ des zu kalibrierenden Gerätes G die gleichen spektralen Ausschnitte wie **durch** die entsprechenden Austrittspalte der Optik $O_R$ eines baugleichen Referenzgerät R treten;

e. Ermitteln einer Intensitätskorrekturfunktion, die es erlaubt, nach einer Positionierung des Eintrittsspalts und der Austrittspalte für eine beliebige Probe P auf einem Gerät G gemessenen Rohintensitäten so umzurechnen, dass sie den auf einem Referenzgerät R gemessenen Rohintensitäten für P entsprechen, wobei $K'_G$ für jeden Austrittspalt die Koeffizienten eines Intensitätsübertragungspolynoms beinhaltet.

2. Verfahren nach Anspruch 1, **dadurch gekennzeichnet, dass** während der Berechnung von $K'_G$ die Kalibrationsfähigkeit im Sinne der fehlerfreien Übertragbarkeit von Kalibration von G beurteilt wird.

**Claims**

1. A method for calibrating spectrometer systems with a beam path from a beam source to a number of electro-optical sensors without spatial resolution, the beam path comprising an entry slot, a dispersive element, and a number of exit slots arranged on a focal curve, **characterized by** the following steps:

a. determining a device-independent calibration function $K_u$ on a reference spectrometer R;

b. transmitting the device-independent calibration function $K_u$ to a spectrometer G to be calibrated;

c. determining a respective displacement vector for the entry slot and the exit slots of the spectrometer G by sequential detection of the spectral environment of the exit slots used by changing the angle of incidence of the optics, and using the environment information thus obtained to calculate a vector $K'_G$ that describes the state of the spectrometer system G;

d. moving the entry slot and the exit slots into desired positions as a function of the displacement vectors $K'_G$ which contains desired positions for the entry slot and exit slots, the desired positions indicating to where the entry slot and the exit slots have to be displaced, so the same spectral segments pass through the exit slots of the optics $O_G$ of the device G to be calibrated as through the corresponding exit slots of the optics OR of a reference device R constructed in the same way;

e. determining an intensity correction function which, after positioning of the entry slot and the exit slots, allows raw intensities for any desired sample P measured on a device G to be converted such that they match raw intensities P measured on a reference device R, wherein for each exit slot $K'_G$ contains the coefficients of an intensity transmission polynomial.

**2.** The method as claimed in claim 1, **characterized in that** during calculation of $K'_G$, the calibration capacity is assessed in the sense of faultless transmissibility of calibration of G.

**Revendications**

**1.** Procédé de calibrage de systèmes spectrométriques avec une trajectoire de rayons allant d'une source de rayons à un certain nombre de capteurs électro-optiques sans résolution locale, dans lequel la trajectoire de rayons présente une fente d'entrée, un élément dispersif et un certain nombre de fentes de sortie disposées sur une courbe focale, **caractérisé par** les étapes suivantes consistant à :

a) déterminer une fonction de calibrage indépendante de l'appareil $K_u$ sur un spectromètre de référence R ;
b) transférer la fonction de calibrage indépendante de l'appareil $K_u$ sur un spectromètre à calibrer G ;
c) déterminer respectivement un vecteur de décalage pour la fente d'entrée et pour les fentes de sortie du spectromètre G par une acquisition séquentielle de l'environnement spectral des fentes de sortie utilisées par une modification de l'angle d'incidence du système optique, et une utilisation des informations d'environnement ainsi obtenues pour calculer un vecteur $K'_G$ décrivant l'état du système spectrométrique G ;
d) déplacer la fente d'entrée et les fentes de sortie vers des positions de consigne en fonction du vecteur de décalage $K'_G$, qui comprend des positions de consigne pour la fente d'entrée et les fentes de sortie, dans lequel les positions de consigne indiquent où il convient de décaler la fente d'entrée et les fentes de sortie, afin que les mêmes sections spectrales passent par les fentes de sortie du système optique $O_G$ de l'appareil à calibrer G que par les fentes de sortie correspondantes du système optique OR d'un appareil de référence R de construction identique ;
e) déterminer une fonction de correction d'intensité qui permet après un positionnement de la fente d'entrée et des fentes de sortie de recalculer les intensités brutes mesurées pour un échantillon P quelconque sur un appareil G de telle sorte qu'elles correspondent aux intensités brutes pour P mesurées sur un appareil de référence R, où $K'_G$ comprend pour chaque fente de sortie les coefficients d'un polynôme de transfert d'intensité.

**2.** Procédé selon la revendication 1, **caractérisé en ce que**, pendant le calcul de $K'_G$, la capacité de calibrage en termes d'une possibilité de transfert sans erreur du calibrage de G est évaluée.

Fig. 1

Fig. 2

EP 1 825 234 B1

*Fig. 3*

8

13

11

7

6

*Fig. 4*

*Fig. 5*

*Fig. 6*

**EP 1 825 234 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- FR 2504264 A
- US 3495909 A
- DE 10152679